# EUROPÄISCHE PATENTSCHRIFT

(11) **EP 1 745 189 B1**
(45) Veröffentlichungstag und Bekanntmachung des Hinweises auf die Patenterteilung: **25.06.2014**
(21) Anmeldenummer: 05742995.3
(22) Anmeldetag: 29.04.2005
(51) Int. Cl.: E05D 11/00

(54) **HAUSHALTGERÄT MIT HOHLACHSIGEM SCHARNIER**
HOUSEHOLD APPLIANCE WITH HOLLOW-AXLE HINGE
APPAREIL MENAGER AVEC CHARNIERE A AXE CREUX

(30) Priorität: 04.05.2004 DE 20040070 U
(43) Veröffentlichungstag der Anmeldung: 24.01.2007
(73) Patentinhaber: BSH Bosch und Siemens Hausgeräte GmbH, 81739 München (DE)
(72) Erfinder: RAAB, Alfred, 73460 Hüttlingen (DE)
(86) Internationale Anmeldenummer: PCT/EP2005/051963
(87) Internationale Veröffentlichungsnummer: WO 2005/108725

(56) Entgegenhaltungen:
- WO-A-2004/048730
- DE-U1- 29 918 401
- JP-A- 2001 272 162
- US-A- 2 522 989
- US-B1- 6 192 630

## Beschreibung

Die vorliegende Erfindung betrifft ein Haushaltgerät wie im Oberbegriff von Anspruch 1 definiert ist. Ein solches Haushaltsgerät ist bekannt z.B. aus der JP 2001/272162. Insbesondere betrifft die vorliegende Erfindung ein Scharnier mit einer hohlen Achse, die geeignet ist, eine Versorgungsleitung zwischen zwei über das Scharnier gelenkig miteinander zu verbindenden Teilen entlang der hohlen Achse zu verlegen. Ein derartiges Scharnier kann beispielsweise eingesetzt werden, um eine gelenkige Verbindung zwischen Korpus und Tür eines Haushaltsgerätes, insbesondere eines Kältegerätes, herzustellen.

Eine bekannte Konstruktion eines solchen Scharniers umfasst einen Lagerarm, der an einem ersten Teil, etwa dem Korpus eines Haushaltsgerätes, befestigt werden kann, einen Achsabschnitt, der an einem seiner Längsenden fest mit einer ersten Seite des Lagerarmes verschweißt ist, einen Durchgang, der sich durch den Achsabschnitt in axialer Richtung und durch den Lagerarm erstreckt, sowie eine auf dem Achsabschnitt drehbar gehaltene Lagerhülse, die mit dem zweiten Teil, etwa der Tür des Kältegerätes, fest verbunden ist. Der Achsabschnitt ist hier durch eine geschlitzte Hülse aus Blech gebildet.

Eine genaue Fertigung der Schweißverbindung zwischen Lagerarm und Achsabschnitt erfordert einen hohen Aufwand. Ein weiterer Nachteil ist, dass Inhomogenitäten der Schweißverbindung zu einer Ungleichverteilung von Kraftflüssen führen können, die im Laufe der Zeit zum Brechen der Schweißverbindung führen. Außerdem muss an der von der Lagerbuchse abgewandten Seite des Lagerarmes Platz vorhanden sein, damit entlang dieser Seite die Leitung durch die Bohrung des Lagerarmes hindurch in den Achsabschnitt hineingeführt werden kann.

Die WO 2004/048730 A (ein Stand der Technik gemäß Art. 54(3) EPÜ) offenbart ein Stromversorgungssystem für die Tür eine Kältegerätes, mit einem Korpus und einer daran angelenkten Tür. Das Scharnier weist eine Durchführung für eine elektrische Verkabelung, umfassend ein Verbindungsmittel zur Aufnahme und Befestigen eines Scharniers, eine elektrische Verkabelung, die jeweils Verbindungsmittel mit einer internen elektrischen Schaltung des Gerätes und einer externen elektrischen Schaltung aufweist, einen Kabelkanal in der Tür und eine Öffnung an der Türabschlussleiste in die ein rohrförmiger Scharnierstift hineinragt. Durch den rohrförmigen Scharnierstift ist die elektrische Verkabelung geführt.

Die JP 2001272162 A1 offenbart ein Kältegerät mit einer daran angelegten Tür, die Tür weist am oberen Scharnier einen Durchgang für ein Kabel für die Spannungsversorgung einer Anzeigeeinrichtung auf. Das Scharnier weist einen rohrförmigen Scharnierstift auf, der in eine rohrförmige Buchse ragt. Durch die rohrförmige Buchse ist ein Kabel für die Spannungsversorgung einer Anzeigeeinrichtung geführt.

Da die Höhe von großen Haushaltsgeräten für die stationäre Aufstellung im Allgemeinen durch Rastermaße strikt vorgegeben sind, ist das bekannte hohlachsige Scharnier nicht ohne weiteres geeignet, wenn innerhalb einer existierenden Modellreihe von Geräten zusätzlich Modelle angeboten werden sollen, bei denen eine Versorgungsleitung zwischen Korpus und Tür hin- und hergeführt ist. Wenn die Konstruktion eines Gerätemodells ohne eine solche Durchführung gewissenhaft optimiert ist, kann davon ausgegangen werden, dass die Tür so groß wie möglich gemacht ist, und dass deshalb innerhalb der vorgegebenen Bauhöhe des Gerätes kein Platz mehr zur Verfügung steht, um an der von dem Achsabschnitt abgewandten Seite des Lagerarmes die Versorgungsleitung zu führen. Um mit dem existierenden Scharnier eine solche Versorgungsleitung führen zu können, müsste das Scharnier vertikal verschoben werden, was zur Folge hat, dass die Höhe der Tür angepasst werden muss. Das heißt, es muss ein anderes Türmodell angefertigt werden als bei einem Gerät, das keine Leitungsdurchführung aufweist. Dies macht die Fertigung des Gerätes mit Leitungsdurchführung kostspielig.

Aufgabe der vorlegenden Erfindung ist daher, ein Haushaltsgerät mit einem hohlachsigen Scharnier zu schaffen, dessen Platzbedarf sich durch eine durchgeführte Versorgungsleitung nicht maßgeblich ändert.

Die Aufgabe wird gelöst durch ein Haushaltsgerät mit einem hohlachsigen Scharnier mit den Merkmalen des Anspruches 1.

Beim bekannten Scharnier weist der Durchgang für die Versorgungsleitung eine Öffnung in radialer Richtung in einem Abschnitt zwischen der Lagerhülse und einer von der ersten Seite abgewandten zweiten Seite des Lagerarmes auf. Dadurch kann die Versorgungsleitung aus der Durchführung in Höhe dieser Öffnung herausgeführt werden und kann infolgedessen seitlich neben dem Lagerarm weitergeführt werden. Der zusätzliche Platzbedarf, der sich herkömmlicherweise durch eine Führung der Leitung entlang der zweiten Seite des Lagerarmes ergibt, entfällt.

Erfindungsgemäß, um ein Schweißen bei der Herstellung des Scharniers zu vermeiden, umfasst der Achsabschnitt einen Lagerzapfen, der zusammen mit dem Lagerarm aus einem Flachmaterialzuschnitt gebildet und von dem Lagerarm in der axialen Richtung abgewinkelt ist.

Vorzugsweise ist der Lagerarm plattenförmig, wobei besagte erste und zweite Seite jeweils eine Hauptoberfläche der Platte bilden, und die Öffnung befindet sich zwischen zwei Ebenen, in denen jeweils die zwei Hauptoberflächen liegen.

Dieser Lagerzapfen kann rund gebogen sein, um den Achsabschnitt und den Durchgang zu bilden; vorzugsweise ist allerdings der Achsabschnitt durch den Lagerzapfen und eine auf den Lagerzapfen aufgesteckte Lagerbuchse gebildet.

Die Lagerhülse kann einfach und preiswert als Formteil aus Kunststoff realisiert sein.

Um die Lagerhülse am Lagerzapfen zu befestigen, weist erstere vorteilhafterweise einen Längshohlraum auf, in den der Lagerzapfen eingreift. Vorzugsweise füllt der Lagerzapfen nicht den ganzen Querschnitt des Längshohlraumes aus, sondern ein Teil von ihm bildet den durch den Achsabschnitt verlaufenden Durchgang.

Aus ästhetischen Gründen und um eine eventuell über das Scharnier verlegte Versorgungsleitung vor Beschädigung zu schützen, weist das Scharnier vorzugsweise ein Gehäuse auf, das den Lagerarm verdeckt, und ein Kanal für die Versorgungsleitung verläuft zwischen einer Außenwand des Gehäuses und der zum Durchgang des Achszapfens führenden Öffnung.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 eine auseinandergezogene Ansicht eines Lagerwinkels für ein erfindungsgemäßes Scharnier;
Fig. 2 einen Schnitt durch die Lagerhülse des Lagerwinkels aus Fig. 2;
Fig. 3 eine Ansicht einer zweiten Ausgestaltung eines Lagerwinkels;
Fig. 4 eine perspektivische Ansicht eines erfindungsgemäßen Scharniers mit geschlossenem Gehäuse, eingesetzt an einem Kältegerät; und
Fig. 5 eine perspektivische Ansicht des Scharniers aus Fig. 4 mit geöffnetem Gehäuse.

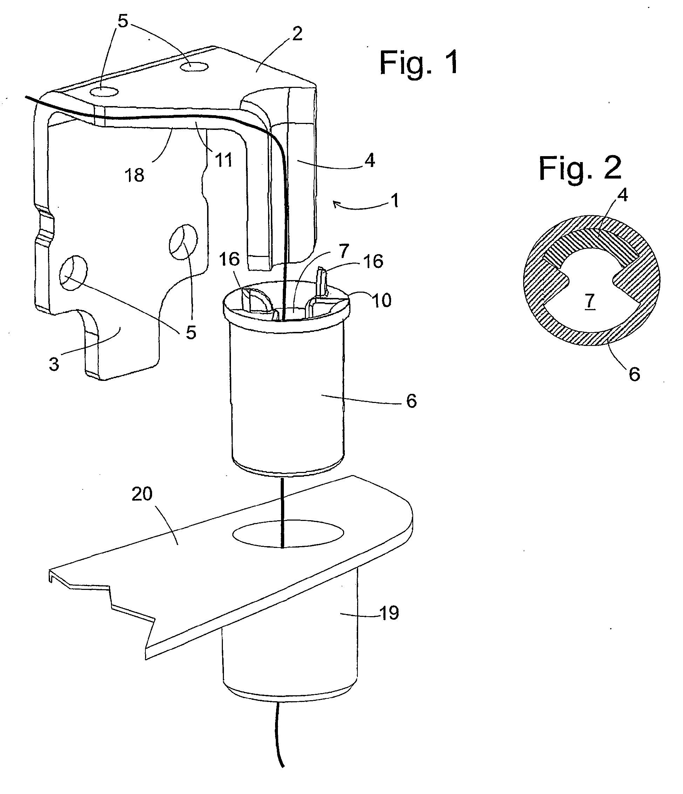

Das in Fig. 1 gezeigte zum Einsatz in einen weiter unten genauer erläuterten Gerätekorpus dienende obere Scharnier setzt sich zusammen aus einem aus Flachmaterial zugeschnittenen und gebogenen Blechteil 1 mit einem plattenförmigen Lagerarm 2, von dem an einem Ende ein Befestigungsflansch 3 und an einem anderen Ende ein Lagerzapfen 4 abgewinkelt sind. Bohrungen 5 im Befestigungsflansch 3 dienen zur Befestigung des Blechteiles 1 an einen Korpus eines Haushaltsgerätes; Bohrungen 5 im Lagerarm 2 dienen zur Verrastung eines Gehäuses, wie später noch genauer erläutert wird.

Der Lagerzapfen 4 ist in sich gekrümmt, mit einer dem Befestigungsflansch 3 zugewandten konvexen Seite. Eine Lagerhülse 6 aus Kunststoff ist zum Aufstecken auf den Lagerzapfen 4 vorgesehen, wobei im aufgesteckten Zustand ein oberer Rand 10 der Lagerhülse 6 an der Unterseite 18 des Lagerarmes 2 zu liegen kommt. Die Lagerhülse 6 ist vorgesehen, um in eine hohle zylindrische Buchse 19 einzugreifen, die an einem oberen Abschlussprofil 20 aus Kunststoff einer Kältegerätetür einteilig ausgeformt ist.

Ein nicht gezeigtes, zum Scharnier der Fig. 1 spiegelsymmetrisches unteres Scharnier verbindet Korpus und Tür in deren unterem Bereich.

Wie der Schnitt der Fig. 2 zeigt, ist die Lagerhülse 6 an ihrer Außenseite kreisrund und hat im Inneren eine sich über ihre gesamte Länge erstreckende Aussparung 7 mit einem Querschnitt, der in etwa zwei sich mit ihren Spitzen überlagernden Kreissektoren entspricht. Ein von der Tür ausgehendes elektrisches Kabel 8 durchläuft, wie in Fig. 1 gezeigt, eine Bohrung an der unteren Spitze der Buchse 19, die Leitungsdurchführung 7 bis zu deren an der Unterseite 18 des Lagerarmes 2 anliegenden oberem Rand 10. Ab diesem oberen Rand 10 ist die Durchführung in seitlicher Richtung offen, so dass das Kabel 8 von dort aus an einer Seitenkante 11 des Lagerarmes 2 entlanggeführt werden kann. Zwei über die Oberkante 10 der Lagerhülse 6 überstehende Laschen 16 liegen an den Seitenkanten des Blechteiles 1 in einem Übergangsbereich zwischen dem Lagerzapfen 4 und dem Lagerarm 2 an, um einen Kontakt des Kabels mit eventuellen scharfen Graten des Blechteiles 1 an dieser Stelle zu verhindern.

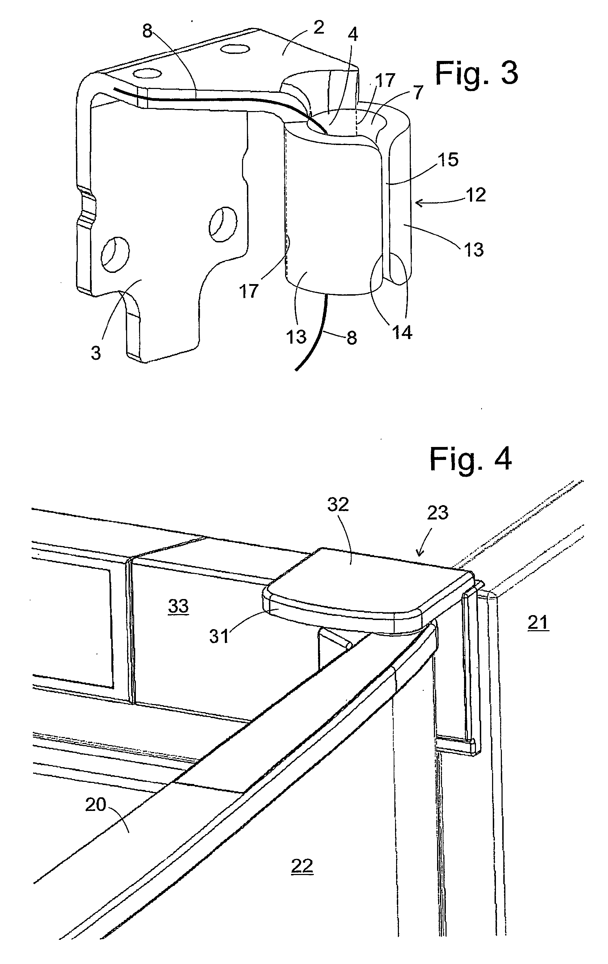

Bei der in Fig. 3 gezeigten Ausgestaltung des Lagerwinkels sind der Lagerarm 2 und der Befestigungsflansch 3 mit den in Fig. 1 und 2 gezeigten entsprechenden Elementen identisch. Auch ein Bereich, der in Form und Lage dem Lagerzapfen 4 entspricht, ist am Lagerwinkel der Fig. 3 vorhanden. Allerdings gehen von den in der Figur jeweils als gestrichelte Linien angedeuteten seitlichen Rändern 17 des Lagerzapfens 4 in seitlicher Richtung zwei Laschen 13 aus, deren Außenränder 14 gegeneinander gebogen sind, um eine Lagerhülse 12 zu schaffen, durch die sich die Aussparung 7 für die durchzuführende Leitung 8 erstreckt. Ein Spalt 15 zwischen den aufeinander zugebogenen Rändern 14 ist schmaler als der Durchmesser der durch die Aussparung 7 geführten Leitung 8, so dass diese nicht in den Spalt 15 eindringen und bei Drehung der Tür an den Wänden von deren (in der Figur nicht gezeigten) die Lagerhülse 12 aufnehmenden Buchse 19 scheuern kann.

Fig. 4 ist eine perspektivische Teilansicht eines Kälte gerätegehäuses, in dem die vorliegende Erfindung angewendet ist. Gezeigt sind die obere rechte Ecke eines Kältegeräte-Korpus 21 und einer Tür 22, deren oberer Abschluss durch das bereits erwähnte Abschlussprofil 20 gebildet ist. Das mit Bezug auf Fig. 1 oder Fig. 3 beschriebene Scharnier ist im Inneren eines flachen Gehäuses 23 verborgen, das von der Vorderseite des Korpus 21 absteht.

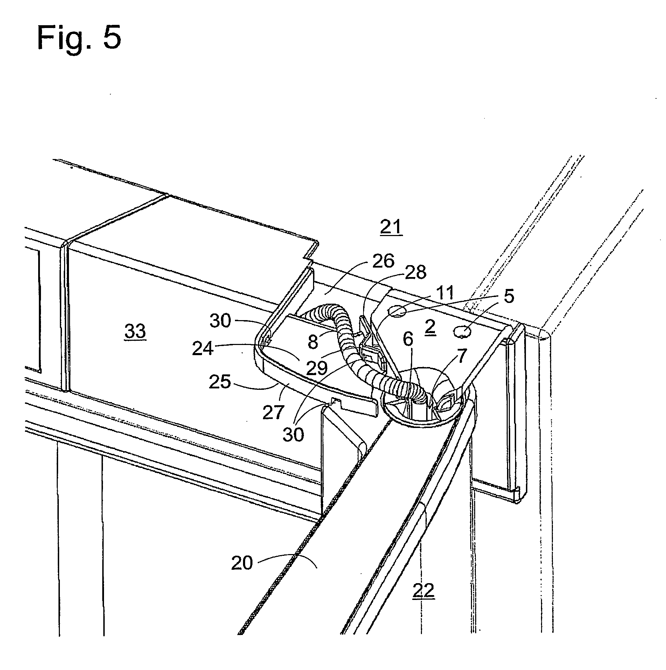

Das Gehäuse 23 ist aufgebaut aus zwei Halbschalen, von denen der Darstellung der Fig. 5 die obere 32 entfernt ist. Man erkennt so das Kabel 8, das, aus der Aussparung 7 der Lagerbuchse 6 kommend, seitlich in einen durch eine untere Halbschale 25 des Gehäuses 23 begrenzten flachen Kanal 24 eintritt und schließlich einen Hohlraum 26 des Korpus 21 erreicht. Der Kanal 24 ist in der Horizontalen durch eine Außenwand 27 und zu der Seitenkante 11 des Lagerarms 2 hin durch eine Trennwand 28 begrenzt. An der Außenwand 27 und an einem ins Innere des Kanals 24 gerichteten Vorsprung 29 der Trennwand 28 sind jeweils Rastausschnitte 30 gebildet, die vorgesehen sind, um Rastnasen aufzunehmen, die an einer die Außenwand 27 umgreifenden Außenwand 31 der oberen Halbschale 32 (siehe Fig. 4) bzw. an einem nicht gezeigten, von oben zwischen die Kante 11 und den Vorsprung 29 eingreifenden Zapfen der oberen Halbschale 32 gebildet sind. Die obere Halbschale 32 kann auch mit in die Bohrungen 5 des Lagerarmes 2 eingreifenden Rastzapfen versehen sein, um so die obere Halbschale 32 auf ihrer gesamten Breite sicher zu verankern.

Die untere Halbschale 25 kann mit einer den Hohlraum 26 verdeckender vertikalen Blende 33 des Korpus einteilig ausgebildet sein oder auf eine Kante dieser Blende 33 aufgesteckt oder in anderer Weise daran befestigt sein.

## Patentansprüche

1. Haushaltsgerät, wie Kältegerät oder dergleichen, mit einem hohlachsigen Scharnier, das ein Lagerarm (2) mit einem Achsabschnitt (4, 6; 4, 13) aufweist, der an einem seiner Längsenden fest mit einer ersten Seite (18) des Lagerarms (2) verbunden ist und einem Durchgang (7), der sich durch den Achsabschnitt (4, 6; 4, 13) in axialer Richtung erstreckt, der in einer Lagerbuchse (19) drehbar gelagert ist, der Durchgang (7) in einem zwischen der Lagerbuchse (19) und einer von der ersten Seite (18) abgewandten zweiten Seite des Lagerarms (2) liegenden Abschnitt eine Öffnung in radialer Richtung aufweist, **dadurch gekennzeichnet, dass** der Achsabschnitt (4, 6; 4, 13) einen Lagerzapfen (4) umfasst, der zusammen mit dem Lagerarm (2) aus einem Flachmaterialzuschnitt gebildet und von dem Lagerarm (2) in der axialen Richtung abgewinkelt ist.

2. Haushaltsgerät nach Anspruch 1, **dadurch gekennzeichnet, dass** der Lagerarm (2) plattenförmig ausgebildet ist, wobei die erste (18) und die zweite Seite jeweils eine Hauptoberfläche der Platte bilden, und dass die Öffnung sich zwischen zwei Ebenen befindet, in denen jeweils die zwei Hauptoberflächen liegen.

3. Haushaltsgerät nach Anspruch 1 oder 2, **dadurch gekennzeichnet, dass** das Flachmaterial rundgebogen ist, um den Achsabschnitt (4, 13) und den Durchgang (7) zu bilden.

4. Haushaltsgerät nach Anspruch 1 oder 2, **dadurch gekennzeichnet, dass** der Achsabschnitt (4, 6) durch den Lagerzapfen (4) und eine auf den Lagerzapfen (4) aufgesteckte Lagerhülse (6) gebildet ist.

5. Haushaltsgerät nach Anspruch 4, **dadurch gekennzeichnet, dass** die Lagerhülse (6) ein Formteil aus Kunststoff ist.

6. Haushaltsgerät nach Anspruch 4 oder 5, **dadurch gekennzeichnet, dass** der Lagerzapfen (4) in einen Längshohlraum der Lagerbuchse (6) eingreift und zumindest in Drehrichtung des Lagerzapfens (4) form- und/oder kraftschlüssig gehalten ist.

7. Haushaltsgerät nach einem der vorhergehenden Ansprüche, **dadurch gekennzeichnet, dass** der Lagerarm (2) von einem Gehäuse (23) verdeckt ist, und dass ein Kanal (24) sich zwischen einer Außenwand (27) des Gehäuses (23) und dem Lagerarm (2) von der Öffnung aus erstreckt.

8. Haushaltsgerät nach einem der vorhergehenden Ansprüche, **dadurch gekennzeichnet, dass** eine elektrische Leitung (8) durch den Durchgang (7) geführt ist.

## Claims

1. Household appliance, such as refrigerator or the like, with a hollow-axle hinge having a support arm (2) with an axle section (4, 6; 4, 13) which, at one of its longitudinal ends, is rigidly connected to a first side (18) of the support arm (2) and a passage (7), which extends through the axle section (4, 6; 4, 13) in the axial direction, which is rotatably supported in a bearing bush (19), the passage (7), in a section lying between the bearing bush (19) and a second side of the support arm facing away from the first side (18), has an opening in the radial direction, **characterised in that** the axle section (4, 6; 4, 13) has a bearing journal (4) which is formed together with the support arm (2) from a flat material blank and is angled away from the support arm (2) in the axial direction.

2. Household appliance according to claim 1, **characterised in that** the support arm (2) is embodied in the form of a plate, wherein the first (18) and the second side each form a main surface of the plate, and that the opening is located between two planes in which the two main surfaces lie in each case.

3. Household appliance according to claim 1 or 2, **characterised in that** the flat material is bent around to form the axle section (4, 13) and the passage (7).

4. Household appliance according to claim 1 or 2, **characterised in that** the axle section (4, 6) is formed by the bearing journal (4) and a bearing sleeve (6) placed onto the bearing journal (4).

5. Household appliance according to claim 4, **characterised in that** the bearing sleeve (6) is a plastic moulded part.

6. Household appliance according to claim 4 or 5, **characterised in that** the bearing journal (4) engages in a longitudinal hollow space of the bearing sleeve (6) and is held at least in the direction of rotation of the bearing journal (4) by a positive or non-positive fit.

7. Household appliance according to one of the preceding claims, **characterised in that** the support arm (2) is covered by a housing (23), and that a channel (24) extends outwards from the opening between the outer wall (27) of the housing (23) and the support arm (2).

8. Household appliance according to one of the preceding claims, **characterised in that** an electrical lead (8) is routed through the passage (7).

## Revendications

1. Appareil ménager, tel qu'appareil frigorifique ou similaire, comprenant une charnière à axe creux, laquelle présente un bras de palier (2) muni d'un segment d'axe (4, 6 ; 4, 13) qui, sur l'une de ses extrémités longitudinales, est relié de manière fixe à un premier côté (18) du bras de palier (2), et comprenant un passage (7) qui s'étend en direction axiale à travers le segment d'axe (4, 6 ; 4, 13), qui est logé de manière rotative dans une douille de palier (19), le passage (7) présentant en direction axiale une ouverture dans une section située entre la douille de palier (19) et un deuxième côté, détourné du premier côté (18), du bras de palier (2), **caractérisé en ce que** le segment d'axe (4, 6 ; 4, 13) comprend un tourillon (4) qui est formé avec le bras de palier (2) dans un matériau plat découpé et est replié du bras de palier (2) en direction axiale.

2. Appareil ménager selon la revendication 1, **caractérisé en ce que** le bras de palier (2) est réalisé en forme de plaque, le premier côté (18) et le deuxième côté formant respectivement une surface principale de la plaque, et **en ce que** l'ouverture se trouve entre deux plans dans lesquels sont respectivement situées les deux surfaces principales.

3. Appareil ménager selon la revendication 1 ou 2, **caractérisé en ce que** le matériau plat est cintré pour former le segment d'axe (4, 13) et le passage (7).

4. Appareil ménager selon la revendication 1 ou 2, **caractérisé en ce que** le segment d'axe (4, 6) est formée par le tourillon (4) et par une douille de palier (6) emboîtée sur le tourillon (4).

5. Appareil ménager selon la revendication 4, **caractérisé en ce que** la douille de palier (6) est une pièce formée en matière plastique.

6. Appareil ménager selon la revendication 4 ou 5, **caractérisé en ce que** le tourillon (4) a prise dans un espace creux longitudinal de la douille de palier (6) et est maintenu par adhérence de forme et/ou de force au moins dans le sens de rotation du tourillon (4).

7. Appareil ménager selon l'une quelconque des revendications précédentes, **caractérisé en ce que** le bras de palier (2) est recouvert par un boîtier (23), et **en ce qu'**un canal (24) s'étend entre une paroi extérieure (27) du boîtier (23) et le bras de palier (2) à partir de l'ouverture.

8. Appareil ménager selon l'une quelconque des revendications précédentes, **caractérisé en ce qu'**une ligne électrique (8) est guidée à travers le passage (7).
